# EUROPÄISCHE PATENTANMELDUNG

(11) **EP 1 914 062 A1**
(43) Veröffentlichungstag der Anmeldung: **23.04.2008**
(21) Anmeldenummer: 07116389.3
(22) Anmeldetag: 14.09.2007
(51) Int. Cl.: B29C 73/16, B60C 23/10, B60S 5/04

(54) **Einrichtung in Form eines Reparatursatzes**

(30) Priorität: 20.10.2006 DE 202006016087 U
(71) Anmelder: Continental Aktiengesellschaft, 30165 Hannover (DE)
(72) Erfinder: Spallek, Georg, 31515, Wunstorf (DE)

(57) **Zusammenfassung**

Einrichtung in Form eines Reparatursatzes zum Abdichten und Aufpumpen aufblasbarer Gegenstände, insbesondere zum Abdichten und Aufpumpen von Kraftfahrzeugreifen, wobei die Einrichtung mindestens ein Befestigungsmittel aufweist, mit dessen Hilfe die Einrichtung im Betriebszustand an einem Fahrzeug temporär befestigbar ist.

## Beschreibung

Die Erfindung betrifft eine Einrichtung in Form eines Reparatursatzes zum Abdichten und Aufpumpen aufblasbarer Gegenstände, insbesondere zum Abdichten und Aufpumpen von Kraftfahrzeugreifen, wobei die Einrichtung im Wesentlichen eine Druckgasquelle, eine Ventil- und Verteilereinheit für Dichtmittel und Druckgas mit einer an die Druckgasquelle anschließbaren Einlassleitung und einer an den aufblasbaren Gegenstand anschließbaren Auslassleitung aufweist, wobei die Einrichtung einen Schlauch als Verbindungsmittel zwischen Auslassleitung und aufblasbarem Gegenstand und ein Verbindungsmittel zur Energiezufuhr der Einrichtung sowie Schalt-, und/oder Steuer- und Anzeigeeinrichtungen für den Betrieb der Einrichtung aufweist.

Bei Reifenpannen besteht in aller Regel das Problem, daß - wie beispielsweise bei einem PKW bisher üblich - ein gefüllter und auf einer Felge montierter Reservereifen mitgeführt werden muß, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muß. Hierzu ist es nicht nur oft notwendig, ein beladenes Fahrzeug auszuräumen, um an den entsprechenden Stauraum zu gelangen, sondern es muß auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muß der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, daß die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren, vollständigen und leicht zu handhabenden Reparatursatz bereitzustellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

So offenbart die EP 972 616 A1 einen Reparatursatz in einem Behälter mit mehreren und mindestens teilweise mit klappbaren Öffnungen versehenen abgetrennte Teilräume für das Zubehör, der an seinen Außenwänden angeordnete und von außen bedien- und sichtbare Schalt-, Steuer- und Anzeigeeinrichtungen für den Betrieb der Arbeitsgeräte und / oder Werkzeuge beinhaltet und mit einem separaten Behältnis mit einem in den Reifen einfüllbaren selbsttätigen Dichtmittel versehen ist.

Nachteilig ist bei diesem und bei den übrigen bekannten tragbaren Reparatursätzen, dass letzterer in aller Regel bei einer Reifenpanne zur Inbetriebnahme auf die Straße bzw. auf den Boden gelegt werden muss und danach über die Verbindungsmittel mit dem Reifenventil und der Stromzufuhr verbunden wird. Dieser Vorgang muss teilweise mehrfach nach kurzen Fahrstrecken wiederholt werden, um das Dichtmittel im Reifen zu verteilen einen ggf. abgefallenen Luftdruck durch Nachpumpen wieder zu erhöhen. Dies ist nicht nur bei schlechtem Wetter unangenehm. Es kann auch geschehen, dass einzelne Zubehörteile an der letzten Haltestelle vergessen werden.

Für die Erfindung bestand also die Aufgabe, diese Nachteile zu vermeiden, den Komfort bei einem Nachfüllen des Reifens zu verbessern und die Handhabung von Reparatursätzen sicherer zu gestalten.

Gelöst wird diese Aufgabe durch die Merkmale des Hauptanspruchs. Weitere vorteilhafte Ausbildungen sind in den Unteransprüchen offenbart.

Hierbei weist die Reparatureinrichtung mindestens ein Befestigungsmittel auf, mit dessen Hilfe die Einrichtung im Betriebszustand an einem Fahrzeug temporär befestigbar ist. Somit entfällt das Absetzen auf einer evtl. staubigen oder nassen Straße und es wird vermieden, dass einzelne Teile der Einrichtung aus Versehen am letzten Halteort verbleiben.

Eine vorteilhafte Weiterbildung besteht darin, dass das Befestigungsmittel als ein mit der Einrichtung verbundener und an der Fahrzeugkarosserie haftend ansetzbarer Magnet ausgebildet ist. Dadurch wird die Befestigung an der im Allgemeinen aus Metall bestehenden Karosserie eines Fahrzeuges besonders einfach und leicht gestaltet.

Eine weitere vorteilhafte Weiterbildung besteht darin, dass das Befestigungsmittel als eine mit der Einrichtung verbundener und an der Fahrzeugkarosserie oder an der Felge aufnehmbare Rast-, Klemm-, oder Schraubverbindung ausgebildet ist. Diese Ausführung bietet insbesondere für nicht-metallische Fahrzeugbereiche eine einfache und leichte Befestigungsart. Gleiches gilt für eine vorteilhafte Weiterbildung, bei der das Befestigungsmittel als ein mit der Einrichtung verbundener und an der Fahrzeugkarosserie oder an der Felge anschließbarer Vakuum-Saugnapf ausgebildet ist.

Eine weitere vorteilhafte Weiterbildung besteht darin, dass die Einrichtung von einem Gehäuse umgeben ist und das Befestigungsmittel an der Außenseite des Gehäuses angeordnet ist. Damit vereinfacht sich die konstruktive Ausführung und es ergibt sich eine weitere Komfortsteigerung dahingehend, dass durch ein z.B. mit einem Deckel versehenes verschließbares Gehäuse die Einrichtung während kurzer Fahrtstrecken geschlossen werden und an der Fahrzeugkarosserie befestigt verbleiben kann.

Eine weitere vorteilhafte Weiterbildung besteht darin, dass das Gehäuse einen flächigen Permanentmagneten aufweist, der auf seiner am Fahrzeug haftenden Außenseite mit einer Kunst- oder Kunststoffschaumfolie überzogen ist. Damit vermeidet man sicher Kratzer oder Beschädigungen der Karosserieoberfläche in den Befestigungsbereichen.

Eine weitere vorteilhafte Weiterbildung besteht darin, dass die Einrichtung einen Behälter für ein in den aufblasbaren Gegenstand einfüllbares selbsttätiges Dichtmittel aufweist. Dadurch sind alle wesentlichen Teile in der Einrichtung vorhanden und es müssen keine weiteren Verbindungen manuell durchgeführt werden.

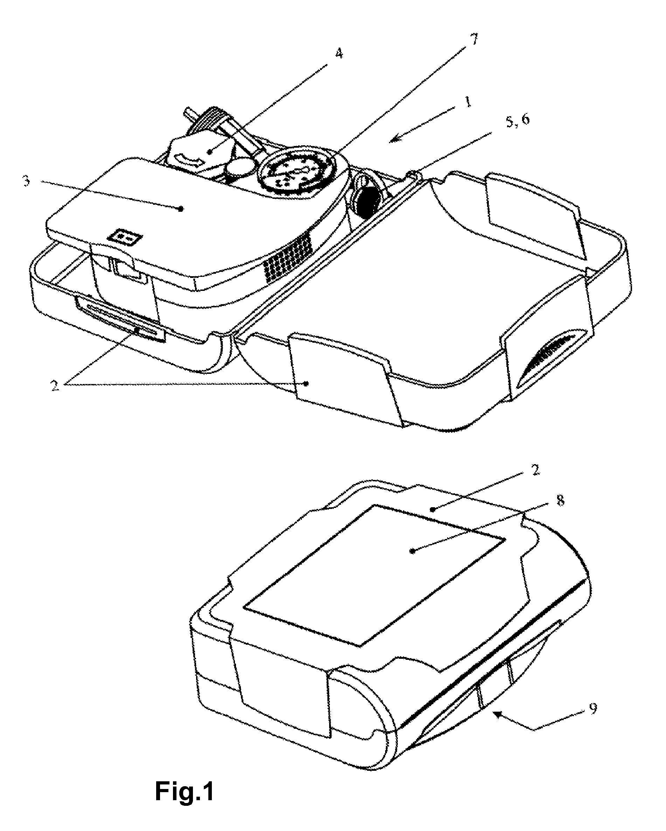

Anhand eines Ausführungsbeispieles soll die Erfindung näher erläutert werden. Die Fig. 1 zeigt eine Einrichtung 1 in Form eines Reparatursatzes zum Abdichten und Aufpumpen aufblasbarer Gegenstände. Dabei ist in der oberen Ansicht die in einem Gehäuse 2 angeordnete Einrichtung 1 geöffnet dargestellt, in der unteren Ansicht geschlossen. Die Einrichtung besteht im Wesentlichen einen Kompressor 3 als Druckgasquelle, einer Ventil- und Verteilereinheit 4 für Dichtmittel und Druckgas, sowie einer hier nicht näher dargestellten an den Kompressor angeschlossenen Einlassleitung und einer zugehörigen Auslassleitung aufweist. Ein Schlauch 5 als Verbindungsmittel zwischen Auslassleitung und aufblasbarem Gegenstand und ein Stromkabel 6 zur Energiezufuhr sind ebenso vorhanden wie Schalt-, und/oder Steuer- und Anzeigeeinrichtungen 7 für den Betrieb der Einrichtung.

Im unteren Teil der Fig. 1, d. h. bei geschlossenen Gehäuse der Reparatureinheit, erkennt man die in Form einer magnetischen Folie 8, 9 auf der Oberseite und der Unterseite des Gehäuse aufgebrachten Permanentmagneten, mit denen die Einrichtung im geöffneten oder geschlossenen Zustand an der metallischen Karosserie eines Fahrzeuges angebracht werden kann.

### Bezugszeichenliste

### (Teil der Beschreibung)

- 1: Reparatureinrichtung
- 2: Gehäuse
- 3: Kompressor
- 4: Ventil- und Verteilereinheit
- 5: Schlauch
- 6: Stromkabel
- 7: Steuer- und Anzeigeeinrichtung
- 8: Magnetische Folie
- 9: Magnetische Folie

## Patentansprüche

1. Einrichtung in Form eines Reparatursatzes zum Abdichten und Aufpumpen aufblasbarer Gegenstände, insbesondere zum Abdichten und Aufpumpen von Kraftfahrzeugreifen, wobei die Einrichtung im Wesentlichen eine Druckgasquelle, eine Ventil- und Verteilereinheit für Dichtmittel und Druckgas mit einer an die Druckgasquelle anschließbaren Einlassleitung und einer an den aufblasbaren Gegenstand anschließbaren Auslassleitung aufweist, wobei die Einrichtung einen Schlauch als Verbindungsmittel zwischen Auslassleitung und aufblasbarem Gegenstand und ein Verbindungsmittel zur Energiezufuhr der Einrichtung sowie Schalt-, und/oder Steuer- und Anzeigeeinrichtungen für den Betrieb der Einrichtung aufweist, **dadurch gekennzeichnet, dass** die Einrichtung mindestens ein Befestigungsmittel aufweist, mit dessen Hilfe die Einrichtung im Betriebszustand an einem Fahrzeug temporär befestigbar ist.

2. Einrichtung nach Anspruch 1, **dadurch gekennzeichnet, dass** das Befestigungsmittel als ein mit der Einrichtung verbundener und an der Fahrzeugkarosserie haftend ansetzbarer Magnet ausgebildet ist.

3. Einrichtung nach Anspruch 1, **dadurch gekennzeichnet, dass** das Befestigungsmittel als eine mit der Einrichtung verbundener und an der Fahrzeugkarosserie oder an der Felge aufnehmbare Rast-, Klemm-, oder Schraubverbindung ausgebildet ist.

4. Einrichtung nach Anspruch 1 bis 3, **dadurch gekennzeichnet, dass** das Befestigungsmittel als ein mit der Einrichtung verbundener und an der Fahrzeugkarosserie oder an der Felge anschließbarer Vakuum-Saugnapf ausgebildet ist.

5. Einrichtung nach Anspruch 1 bis 4, **dadurch gekennzeichnet, dass** die Einrichtung von einem Gehäuse umgeben ist und das Befestigungsmittel an der Außenseite des Gehäuses angeordnet ist.

6. Einrichtung nach Anspruch 5, **dadurch gekennzeichnet, dass** das Gehäuse einen flächigen Permanentmagneten aufweist, der auf seiner am Fahrzeug haftenden Außenseite mit einer Kunst- oder Kunststoffschaumfolie überzogen ist.

7. Einrichtung nach Anspruch 1 bis 6, **dadurch gekennzeichnet, dass** die Einrichtung einen Behälter für ein in den aufblasbaren Gegenstand einfüllbares selbsttätiges Dichtmittel aufweist.
